# EUROPÄISCHE PATENTSCHRIFT

(11) **EP 2 258 536 B1**
(45) Veröffentlichungstag und Bekanntmachung des Hinweises auf die Patenterteilung: **21.09.2011**
(21) Anmeldenummer: 09162065.8
(22) Anmeldetag: 05.06.2009
(51) Int. Cl.: B29C 51/42

(54) **Vorrichtung zum Warmformen einer Folie**
Device for thermoforming a film
Dispositif destinés au formage à chaud d'une feuille

(43) Veröffentlichungstag der Anmeldung: 08.12.2010
(73) Patentinhaber: Uhlmann Pac-Systeme GmbH & Co. KG, 88471 Laupheim (DE)
(72) Erfinder: Gertitschke, Detlev, 88471 Laupheim (DE); Singer, Anton, 88471 Laupheim (DE)
(74) Vertreter: Wächter, Jochen

(56) Entgegenhaltungen:
- DE-A1- 19 915 254
- US-A1- 2002 185 767

## Beschreibung

Die Erfindung betrifft eine Vorrichtung zum Warmformen einer Folie.

Derartige Vorrichtungen werden beispielsweise in der pharmazeutischen Industrie zur Herstellung von Blisterfolien verwendet, in welche Näpfe zur Aufnahme von Tabletten eingeformt werden müssen. Auch in vielen anderen Industriebereichen findet das Warmformen von Folien Anwendung.

Es gibt eine Reihe von verschiedenen Verfahren zum Warmformen von Folien, beispielsweise mittels Druckluft, durch Vakuumansaugung oder durch reine Positivformung. Beim Warmformen einer Folie mittels Druckluft werden Vorstreckstempel eingesetzt, um je nach Folienart, Foliendicke und Durchmesser-/Tiefenverhältnis der zu formenden Näpfe gleichmäßige Wanddicken zu gewährleisten und den Formprozess zu unterstützen. Ein Beispiel eines herkömmlichen Verfahrens zum Warmformen einer Folie ist aus DE 199 15 254 A1 bekannt.

Damit sich die aufgeheizte Folie bei Berührung mit den Stempeln nicht abkühlt, werden diese beheizt. Die Stempel befinden sich beim Warmformen mit Druckluft im Druckraum des Formwerkzeugs und werden durch Heizpatronen beheizt. Dies erfordert Kabelverbindungen, die durch ständige Auf- und Abbewegung der Stempel auf Biegung beansprucht werden. Kommt es zum Kabelbruch, muss das Formwerkzeug demontiert werden und die fehlerhaften Teile wie Kabel oder Heizpatronen müssen ausgetauscht werden. Der Ausfall erfolgt jeweils ungeplant und die Produktion muss daher unterbrochen werden.

Aus US 2002/185767 A1 ist eine Vorrichtung zum Warmformen einer pastösen Masse bekannt, bei der das bewegbare obere Formwerkzeug Induktionsspulen und das untere Formwerkzeug entsprechende Induktionselemente aufweist, um die Erwärmung des unteren Formwerkzeugs durchzuführen.

Der vorliegenden Erfindung liegt daher die Aufgabe zugrunde, eine Vorrichtung zum Warmformen einer Folie zu schaffen, die besonders robust ist und keine bewegten elektrischen Bauteile im Formwerkzeug enthält.

Diese Aufgabe wird durch die Merkmale des Anspruchs 1 gelöst.

Die erfindungsgemäße Vorrichtung zum Warmformen einer Folie weist zwei Formwerkzeuge auf, von denen eine erstes Formwerkzeug eine Stempelhalteplatte und eine Mehrzahl von davon abragenden beheizten Stempeln, die in einem vorbestimmten Abstand zueinander angeordnet sind, umfasst. Dabei ist in einem Bereich der Vorrichtung, der an die Stem-pelhalteplatte angrenzt, eine Mehrzahl von Induktionsspulen angeordnet, und die Stempelhalteplatte weist mindestens ein Induktionselement aus induktiv aufheizbarem Material auf.

Zum Durchführen des Warmformens mittels Druckluft weist das erste Formwerkzeug ein stationäres Gehäuse auf, in dem die Stempelhalteplatte beweglich gelagert ist. Außerdem weist das Gehäuse Durchtrittsöffnungen für die Stempel auf.

Durch diese Ansgestaltung werden störanfällige mitbewegte Kabelverbindungen vermieden und die Robustheit und Kompaktheit der Vorrichtung verbessert.

Vorzugsweise weist das magnetische Wechselfeld der Induktionsspulen einen Frequenzbereich von 25 bis 50 kHz auf. Damit wird in dem Induktionselement bzw. den Induktionselementen eine Leistung von 400 bis 800 W erzeugt, die für das Erwärmen der Stempelhalteplatte sowie der Stempel hervorragend geeignet ist.

In einer ersten Ausführungsform ist das mindestens eine Induktionselement als dünne Platte ausgebildet, welche mit einem Grundkörper der Stempelhalteplatte wärmeleitend verbunden ist. Damit werden eine großflächige Aufheizung des Induktionselements sowie eine kontinuierliche Weiterleitung der erzeugten Wärme an den Grundkörper der Stempelhalteplatte und damit an die Stempel ermöglicht.

In einer alternativen Ausführungsform sind mehrere Induktionselemente vorgesehen, die als elektrische Leiterbahnen ausgebildet sind. In diesem Fall können die Leiterbahnen geradlinig ausgebildet sein und in einem vorbestimmten Abstand zueinander am Grundkörper der Stempelhalteplatte angeordnet sein, um eine ausreichende Wärmeerzeugung zu gewährleisten. Die Leiterbahnen sind vorzugsweise aus einem Material, das sich leicht mittels Induktion erwärmen lässt, in dem aber nur relativ kleine Ströme erzeugt werden.

In einer solchen Konstruktion hat es sich als kostengünstig erwiesen, dass die Leiterbahnen als Rundstab oder als Rechteckstab ausgebildet sind und in Ausnehmungen des Grundkörpers der Stempelhalteplatte eingebracht, vorzugsweise eingepresst sind. Dadurch wird auf einfache Weise eine wärmeleitende Verbindung zwischen den Induktionselementen und dem Grundkörper der Stempelhalteplatte sichergestellt.

Um eine ausreichende Heizleistung zu gewährleisten, ist das mindestens eine Induktionselement vorzugsweise aus einem elektrisch stark leitfähigen Material, vorzugsweise Eisen, gebildet.

Um die Weiterleitung der im Induktionselement erzeugten Wärme zu den Stempeln sicherzustellen, weist die Stempelhalteplatte einen Grundkörper aus einem wärmeleitenden Material, vorzugsweise Aluminium, auf.

Für die Kontrolle und Regelung der Induktionsspulen ist ein Sensor zur Temperaturmessung vorgesehen, der vorzugsweise stationär im Formwerkzeug angeordnet ist und vorzugsweise berührungslos arbeitet. So können auf einfache Weise Abweichungen in der Temperatur entdeckt und durch eine entsprechende Regelung der Induktionsspulen korrigiert werden.

Das Verfahren zum Warmformen einer Folie weist folgende Schritte auf: Bereitstellen einer auf Formtemperatur erwärmten thermoplastischen Folie zwischen zwei Formwerkzeugen, Erwärmen von Stempeln eines ersten Formwerkzeugs, Vorstrecken der Folie mit Hilfe der aufgeheizten Stempel und Ausformen von Näpfen in der Folie mittels Druckluft. Dabei wird das Erwärmen der Stempel des ersten Formwerkzeugs mittels Induktion vorgenommen.

Auf diese Weise wird die Anzahl mechanisch beanspruchter Bauteile im ersten Formwerkzeug verringert und ein robustes, bedienungsfreundliches Verfahren zum Warmformen einer Folie geschaffen.

Weitere Einzelheiten, Merkmale und Vorteile der vorliegenden Erfindung ergeben sich aus der nachfolgenden Beschreibung unter Bezugnahme auf die Zeichnungen.
- Fig. 1: ist eine Querschnittsansicht einer ersten Ausführungsform der erfindungsge- mäßen Vorrichtung zum Warmformen einer Folie;
- Fig. 2: ist eine Querschnittsansicht einer alternativen Ausführungsform der erfin- dungsgemäßen Vorrichtung zum Warmformen einer Folie; und
- Fig. 3: ist eine Draufsicht auf die Stempelhalteplatte der Vorrichtung aus Fig. 2.

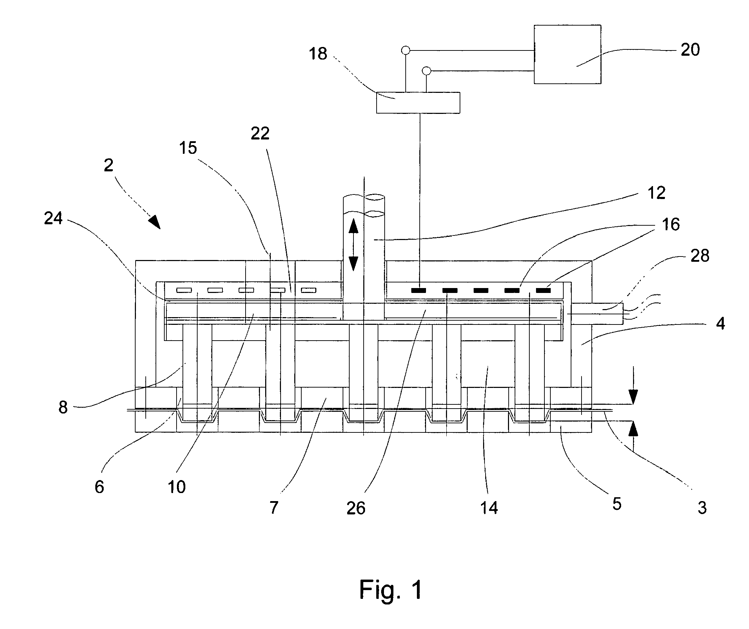

In Fig. 1 ist eine Ausführungsform der erfindungsgemäßen Vorrichtung zum Warmformen einer Folie in Querschnittsansicht dargestellt. Die Vorrichtung umfasst ein erstes Formwerkzeug 2, welches im vorliegenden Fall zum Ausbilden von Näpfen in eine Folie 3, hier eine Blisterfolie, mittels Druckluft ausgestaltet ist, sowie ein zweites Formwerkzeug 5 als Gegenstück zum ersten Formwerkzeug 2.

Das erste Formwerkzeug 2 weist ein Gehäuse 4 auf, das beispielsweise aus Aluminium bestehen kann. Im vorliegenden Fall weist das Gehäuse 4 in seinem Bodenbereich eine Druckplatte 7 mit Durchtrittsöffnungen 6 für beheizbare Stempel 8 auf, welche als Vorstreckstempel dienen. Die Stempel 8 sind mit einer Stempelhalteplatte 10 verbunden, welche wiederum durch einen Antrieb 12, beispielsweise einen Pneumatikzylinder, auf- und abbewegbar ist.

Durch die Auf- und Abbewegung der Stempel 8 (siehe gestrichelte Linien in Fig. 1) werden in die Folie 3 Näpfe vorgeformt, bevor im Inneren des Gehäuses 4 über Durchbrüche 15 ein Druckraum 14 mit beispielsweise 6 bar Überdruck erzeugt wird und so die Näpfe vollständig ausgeformt werden.

Die Stempel 8, welche hier als Vorstreckstempel eingesetzt werden, dienen je nach Folienart, Foliendicke und Durchmesser-/Tiefenverhältnis zur Gewährleistung gleichmäßiger Wanddicken und Unterstützung des Formprozesses. Damit sich die aufgeheizte Folie 3 bei Berührung mit den Stempeln 8 nicht abkühlt, werden diese beheizt.

Hierzu sind in einem Bereich der Vorrichtung, der an die Stempelhalteplatte 10 angrenzt, Induktionsspulen 16 angeordnet. Diese Induktionsspulen 16 werden mittels eines Leistungsteils 18 über ein Steuerelement 20 angesteuert und betrieben. Aus Gründen der Übersichtlichkeit ist hier lediglich eine Induktionsspule 16 als mit dem Leistungsteil 18 verbunden dargestellt. In Wirklichkeit sind natürlich alle Induktionsspulen 16 mit dem Leistungsteil 18 verbunden.

Die Induktionsspulen 16 erzeugen ein magnetisches Wechselfeld in einem Frequenzbereich von zwischen 25 und 50 kHz. Idealerweise sind die Induktionsspulen 16 in einem Gehäuse 22 für die Induktionsspulen 16 angeordnet und somit als fertiger Einbausatz vorhanden. Dadurch ist auf einfache Weise der Einbau sowie ein Austausch oder die Reparatur der Induktionsspulen 16 bzw. des gesamten Gehäuses 22 für die Induktionsspulen 16 möglich.

Der Bereich, in dem die Induktionsspulen 16 angeordnet sind, grenzt an die den Stempeln 8 abgewandte Außenseite der Stempelhalteplatte 10 an. Dort ist ein Induktionselement 24 auf einem Grundkörper 26 der Stempelhalteplatte 10 angeordnet. Das Induktionselement 24 ist im vorliegenden Fall als dünne Platte ausgebildet, welche wärmeleitend mit dem Grundkörper 26 der Stempelhalteplatte 10 verbunden ist. Die Verbindung kann z.B. mittels Reibschweißen, Pressschweißen oder über eine wärmeleitende Klebeverbindung hergestellt sein.

Vorzugsweise ist die dünne Platte aus Blech oder Eisen oder einem anderen elektrisch leitenden Material hergestellt. Generell kann insbesondere jedes elementare Metall oder eine Metalllegierung aus zwei oder mehr metallischen Komponenten verwendet werden. Das Induktionselement 24 kann zum Schutz vor chemischen Reaktionen mit der Umgebung, insbesondere zum Schutz vor Oxidation, auch mit einer Passivierungsschicht überzogen sein.

Aufgrund des magnetischen Wechselfeldes und der dadurch erzeugten Bewegung elektrischer Ladungen im Induktionselement 24 wird dieses induktiv aufgeheizt, vorzugsweise mit einer Leistung von 400 bis 800 W. Über Wärmeleitung wird die im Induktionselement 24 erzeugte Wärme an den Grundkörper 26 der Stempelhalteplatte 10 und weiter an die Stempel 8 übertragen. Hierzu sind der Grundkörper 26 der Stempelhalteplatte 10 sowie die Stempel 8 vorzugsweise aus einem gut wärmeleitenden Material gebildet, beispielsweise aus Aluminium.

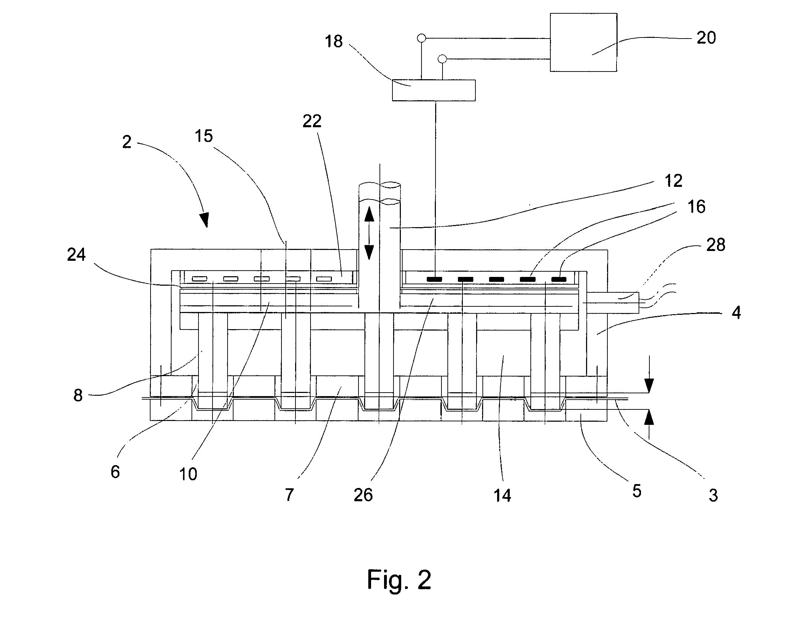

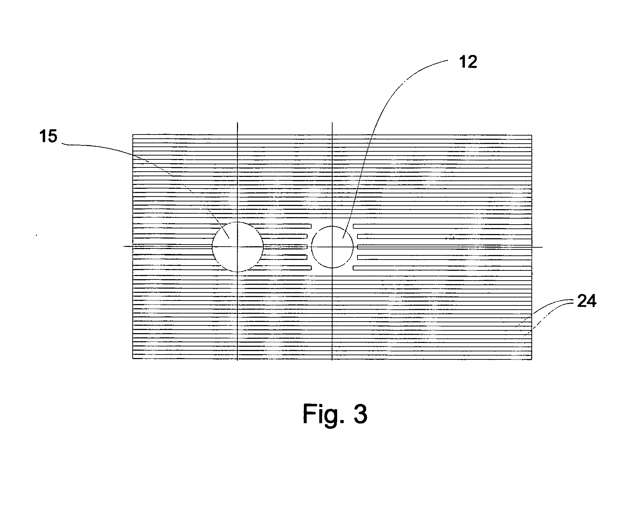

In Fig. 2 und Fig. 3 ist eine ähnliche Ausgestaltung der erfindungsgemäßen Vorrichtung gezeigt. Allerdings sind hier mehrere Induktionselemente 24 vorhanden, die als Leiterbahnen ausgebildet sind, welche in einem vorbestimmten Abstand zueinander verlaufen. Auch diese Leiterbahnen 24 sind elektrisch leitend ausgestaltet und sind wärmeleitend mit dem Grundkörper 26 der Stempelhalteplatte 10 verbunden. In einer speziellen Ausführungsform sind die Leiterbahnen hierzu als Rundstab oder als Rechteckstab ausgebildet und in Ausnehmungen des Grundkörpers 26 der Stempelhalteplatte 10 eingebracht, vorzugsweise eingepresst. Mit dieser Verteilung von Leiterbahnen wird eine ausreichende und gleichmäßige Erwärmung aller Stempel 8 gewährleistet.

Fig. 3 zeigt noch einmal die parallele Ausrichtung der als Leiterbahnen ausgebildeten Induktionselemente 24 gemäß dem Ausführungsbeispiel von Fig. 2. Ebenso ist eine Vielzahl anderer Anordnungen der Induktionselemente 24 denkbar, beispielsweise als Streifen in einer Richtung senkrecht zur dargestellten Richtung, als mäandernde Schleife oder ähnliche geometrische Formen.

Außerdem ist beim Ausführungsbeispiel der Fig. 2 im Bereich des oberen Totpunkts der Bewegung der Stempelhalteplatte 10 ein Sensor 28 zur Temperaturmessung angeordnet. Im dargestellten Beispielsfall erfolgt die Temperaturmessung berührungslos und der Sensor ist in einem Bereich des Gehäuses 4 der Vorrichtung stationär angeordnet. Die Messergebnisse des Sensors 28 werden an das Steuerelement 20 weitergegeben, welches bei Abweichungen vom Soll-Zustand die Induktionsspulen 16 entsprechend nachregelt. Selbstverständlich kann der Sensor 28 auch bei der Ausführungsform aus Fig. 1 eingesetzt werden und kann auch an einer anderen Stelle im Formwerkzeug 2 angeordnet sein.

Durch die erfindungsgemäße Vorrichtung zum Warmformen einer Folie wird die Wahrscheinlichkeit eines ungeplanten Produktionsausfalls auf ein Minimum reduziert.

## Patentansprüche

1. Vorrichtung zum Warmformen einer Folie (3), mit
zwei Formwerkzeugen (2, 5), von denen ein erstes Formwerkzeug (2) eine bewegbare Stempelhalteplatte (10) und eine Mehrzahl von davon abragenden beheizten Stempeln (8), die in einem vorbestimmten Abstand zueinander angeordnet sind, aufweist,
**dadurch gekennzeichnet, dass**
das erste Formwerkzeug (2) ein stationäres Gehäuse (4) aufweist, in dem die Stempelhalteplatte (10) beweglich gelagert ist, dass in einem Bereich der Vorrichtung, der an die Stempelhalteplatte (10) angrenzt, eine Mehrzahl von Induktionsspulen (16) angeordnet ist, und dass die Stempelhalteplatte (10) mindestens ein Induktionselement (24) aus induktiv aufheizbarem Material aufweist.

2. Vorrichtung nach Anspruch 1, **dadurch gekennzeichnet, dass** das magnetische Wechselfeld der Induktionsspulen (16) einen Frequenzbereich von 25 bis 50 kHz aufweist.

3. Vorrichtung nach Anspruch 1 oder 2, **dadurch gekennzeichnet, dass** das mindestens eine Induktionselement (24) eine Leistung von 400 bis 800 W liefert.

4. Vorrichtung nach einem der vorangehenden Ansprüche, **dadurch gekennzeichnet, dass** das Gehäuse (4) eine Druckplatte (7) mit Durchtrittsöffnungen (6) für die Stempel (8) aufweist.

5. Vorrichtung nach einem der vorangehenden Ansprüche, **dadurch gekennzeichnet, dass** das mindestens eine Induktionselement (24) als dünne Platte ausgebildet ist, welche mit einem Grundkörper (26) der Stempelhalteplatte (10) wärmeleitend verbunden ist.

6. Vorrichtung nach einem der Ansprüche 1 bis 4, **dadurch gekennzeichnet, dass** mehrere Induktionselemente (24) vorgesehen sind, die als elektrische Leiterbahnen ausgebildet sind.

7. Vorrichtung nach Anspruch 6, **dadurch gekennzeichnet, dass** die Induktionselemente (24) geradlinig sind und in einem vorbestimmten Abstand zueinander an einem Grundkörper (26) der Stempelhalteplatte (10) angeordnet sind.

8. Vorrichtung nach Anspruch 7, **dadurch gekennzeichnet, dass** die Induktionselemente (24) als Rundstab oder als Rechteckstab ausgebildet sind und in Ausnehmungen des Grundkörpers (26) der Stempelhalteplatte (10) eingebracht sind.

9. Vorrichtung nach einem der vorangehenden Ansprüche, **dadurch gekennzeichnet, dass** das mindestens eine Induktionselement (24) aus einem elektrisch stark leitfähigen Material, vorzugsweise Eisen, gebildet ist.

10. Vorrichtung nach einem der vorangehenden Ansprüche, **dadurch gekennzeichnet, dass** die Stempelhalteplatte (10) einen Grundkörper (26) aus einem wärmeleitenden Material, vorzugsweise Aluminium, aufweist.

11. Vorrichtung nach einem der vorangehenden Ansprüche, **dadurch gekennzeichnet, dass** sie einen Sensor (28) zur Temperaturmessung aufweist.

12. Vorrichtung nach Anspruch 11, **dadurch gekennzeichnet, dass** der Sensor (28) stationär angeordnet ist und berührungslos arbeitet.

## Claims

1. Device for thermoforming a sheet (3), comprising:
two moulds (2, 5), the first mould (2) comprising a movable plug support plate (10) and a plurality of heated plugs (8) projecting therefrom and arranged at a predetermined distance from each other, **characterised in that** the first mould (2) comprises a stationary housing (4), in which the plug support plate (10) is movably mounted, **in that** a plurality of induction coils (16) are mounted in a region of the device adjacent to the plug support plate (10), and **in that** the plug support plate (10) consists of at least one induction element (24) made of an inductively heatable material.

2. Device according to claim 1, **characterised in that** the alternating magnetic field of the induction coils (16) has a frequency range of 25 to 50 kHz.

3. Device according to either claim 1 or claim 2, **characterised in that** the at least one induction element (24) delivers an output of 400 to 800 W.

4. Device according to any one of the preceding claims, **characterised in that** the housing (4) comprises a pressure plate (7) with through-openings (6) for the plugs (8).

5. Device according to any one of the preceding claims, **characterised in that** the at least one induction element (24) is formed as a thin plate, which is connected in a thermally conductive manner to a base body (26) of the plug support plate (10).

6. Device according to any one of claims 1 to 4, **characterised in that** it comprises a plurality of induction elements (24) which are formed as strip conductors.

7. Device according to claim 6, **characterised in that** the induction elements (24) are straight and are arranged on a base body (26) of the plug support plate (10) at a predetermined distance from each other.

8. Device according to claim 7, **characterised in that** the induction elements (24) are formed as round bars or as square bars and are introduced into recesses in the base body (26) of the plug support plate (10).

9. Device according to any one of the preceding claims, **characterised in that** the at least one induction element (24) is made of a material of high electrical conductivity, preferably iron.

10. Device according to any one of the preceding claims, **characterised in that** the plug support plate (10) comprises a base body (26) made of a thermally conductive material, preferably aluminium.

11. Device according to any one of the preceding claims, **characterised in that** it comprises a sensor (28) for measuring the temperature.

12. Device according to claim 11, **characterised in that** the sensor (28) is arranged in a fixed position and works without contact.

## Revendications

1. Dispositif destiné au thermoformage d'une feuille (3), comprenant
deux outils de formage (2, 5), dont un premier outil de formage (2) présente un plateau de maintien de pistons (10) mobile et une pluralité de pistons chauffés (8) dépassant de ce dernier, qui sont disposés à une distance mutuelle prédéfinie,
**caractérisé en ce que**
le premier outil de formage (2) présente un carter stationnaire (4), dans lequel est monté mobile le plateau de maintien de pistons (10), qu'une pluralité de bobines à induction (16) est disposée dans une zone du dispositif, limitrophe au plateau de maintien de pistons (10), et que le plateau de maintien de pistons (10) présente au moins un élément inductif (24) en matériau pouvant être chauffé par induction.

2. Dispositif suivant la revendication 1, **caractérisé en ce que** le champ alternatif magnétique des bobines à induction (16) présente une gamme de fréquences de 25 à 50 kHz.

3. Dispositif suivant l'une des revendications 1 et 2, **caractérisé en ce que** le au moins un élément inductif (24) fournit une puissance de 400 à 800 W.

4. Dispositif suivant l'une des revendications précédentes, **caractérisé en ce que** le carter (4) présente une plaque de pression (7) avec des ouvertures de passage (6) pour les pistons (8).

5. Dispositif suivant l'une des revendications précédentes, **caractérisé en ce que** le au moins un élément inductif (24) est réaliste sous forme de plaque mince, qui est reliée en conduction thermique avec un corps de base (26) du plateau de maintien de pistons (10).

6. Dispositif suivant l'une des revendications 1 à 4, **caractérisé en ce que** sont prévus plusieurs éléments inductifs (24), réalisés sous forme de pistes conductrices électriques.

7. Dispositif suivant la revendication 6, **caractérisé en ce que** les éléments inductifs (24) sont rectilignes et sont disposés à une distance mutuelle prédéfinie sur un corps de base (26) du plateau de maintien de pistons (10).

8. Dispositif suivant la revendication 7, **caractérisé en ce que** les éléments inductifs (24) sont réalisés sous forme de barre ronde ou de barre rectangulaire, et sont montés dans des creux du corps de base (26) du plateau de maintien de pistons (10).

9. Dispositif suivant l'une des revendications précédentes, **caractérisé en ce que** le au moins un élément inductif (24) est formé d'un matériau de forte conductivité électrique, de préférence de fer.

10. Dispositif suivant l'une des revendications précédentes, **caractérisé en ce que** le plateau de maintien de pistons (10) présente un corps de base (26) en un matériau conducteur de la chaleur, de préférence de l'aluminium.

11. Dispositif suivant l'une des revendications précédentes, **caractérisé en ce qu'**il présente un capteur (28) pour la mesure de température.

12. Dispositif suivant la revendication 11, **caractérisé en ce que** le capteur (28) a une disposition stationnaire et fonctionne sans contact.
